# EUROPEAN PATENT APPLICATION

(11) **EP 0 686 972 A2**
(43) Date of publication of application: **13.12.1995**
(21) Application number: 95109015.8
(22) Date of filing: 12.06.1995
(51) Int. Cl.: G11B 19/00

(54) **Multiple motor drive for compact disk players**

(30) Priority: 11.06.1994 JP 152855/94; 23.06.1994 JP 164730/94
(71) Applicant: NAKAMICHI CORPORATION, Kodaira-shi, Tokyo 187 (JP)
(72) Inventor: Nakamichi, Niro, Tokyo 179 (JP)
(74) Representative: Merten, Fritz

(57) **Abstract**

A motor drive, for rotating turntables and moving optical pickups in CD players, employs two motors, in parallel, to power a drive train. In players used to play CD-ROMs, a high torque power source is required to permit high rotation speeds demanded by these units. In the present invention, the rotors of the motors are positioned side-by-side with their drive shafts interconnected by the drive train. Output is transmitted by one of the motor shafts. By combining the motors in this way, high output torque is achieved with a compact design. In the preferred embodiment, the rotors of the two motors are drivingly interconnected so that there is a one-to-one relationship between the rotor angular positions. The stators of the motors are positioned so that the torque peaks of one of the two motors occurs at a time different from those of the other motor. At least partial cancellation of the torque peaks is achieved. If only partial cancellation occurs, the result is that the drive cogs at a frequency that is twice that of a single motor. This makes the stopping resolution for the drive of the invention lower than in a system that employs one motor. Thus the optical pickup's positioning resolution can be greater. If total cancellation occurs, smooth drive output is achieved, which is a benefit for rotating the turntable.

## Description

### BACKGROUND OF THE INVENTION

The present invention relates to motor drives for CD players and specifically to such drives used to rotate CDs and optical readers for playback of CDs.

Known compact disk players use a laser beam generated by an optical pickup to scan and play back data recorded on surfaces of the compact disks. Compact disks are read using a constant linear velocity (CLV) method that requires that the surface of the disk pass under the optical pickup at a constant velocity. Therefore, the disk is rotated at different angular velocities depending on which track is being played. Typically, when the inner-most track is being played back, the disk is rotated at 500 rpm. When the outer-most track is being played back, the disk is rotated at 200 rpm. Therefore, the speed of the spindle motor used to rotate the disk must be able to rotate the disk over an approximately 300 rpm range.

Compact disks used for computer data, CD-ROMs, require the highest possible data transfer rates. To achieve high data transfer rates, drives having disk rotation speeds that are double and quadruple the normal speed are used. For example, to double the rotation speed of a disk, the disk speed, when the inner track is scanned, must be approximately 1000 rpm. The disk speed, during scanning of the outer track, must be approximately 400 rpm. To play back data after moving the optical pickup in the radial direction, it is necessary to move the optical pickup to an appropriate radial position and then to rotate the disk at a speed corresponding to the radial position. In such cases, the time it takes to bring the rotational speed of the disk to the appropriate level has an important impact on the access speed of the disk player.

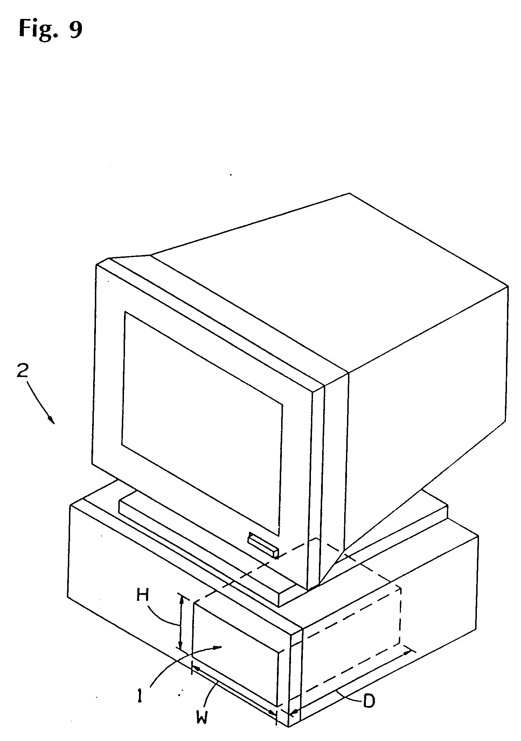

A spindle motor with high torque permits rapid changes in rotation speed. However, such motors tend to be large and expensive. Referring to Fig. 9, a drive 1 in a personal computer 2 occupies a standard space for drives, known as a form factor. A standard form factor is a width of 146mm (5.75 inches), a height of 82mm (3.25 inches), and a depth of 203mm (8.0 inches). Since drive 1 must fit within these dimensions, a large motor is a major obstacle in designing such a drive. U.S. patent 4,394,594 discloses a large flat motor in which the coil and the magnet are located in a single plane. Because of its large diameter, such a motor is not practical. Also, it is known that the torque of a motor can be increased without making the motor larger, but such approaches increase the cost of the motor dramatically.

To overcome the above drawbacks, Japanese utility model examined publication number 62-117758 proposes a configuration using two spindle motors. During normal rotation, when data recorded on the disk is being played back, the disk is rotated by the main motor alone. During start-up, when the rotation speed of the disk is abruptly increased, and during accessing, when the playback position is moved in the radial direction and the speed of the disk changed, the disk is rotated by both the main motor and the secondary motor. This configuration makes possible large and rapid changes in disk rotation speed without the use of an expensive high-torque motor. Unfortunately, however, this configuration requires a clutch to disconnect the main and secondary motors during normal rotation. Additionally, the output from the secondary motor is connected to one end of the shaft from of main motor, while the turntable, on which the disk is mounted, is connected to the other end of the main motor shaft. Thus, a single general-purpose motor cannot be used. The requirement of different motors for the main and secondary motors inevitably leads to higher production costs.

Japanese laid-open publication number 62-31067 describes a similar configuration using a main motor and a secondary motor. During start-up, the secondary motor rotates the disk. During normal rotation, the main motor rotates the disk. However, in this configuration, the main motor and the secondary motor lie on the same axis. Thus, as in the case described above, two kinds of motors are employed resulting in high production costs.

### OBJECTS AND SUMMARY OF THE INVENTION

It is an object of the present invention to provide a disk rotating device that overcomes the drawbacks of the prior art.

Another object of the invention is to provide a motor drive that permits rapid accessing and start-up.

Still another object of the invention is to provide a motor drive for rotating a turntable.

Still another object of the invention is to provide a motor drive for moving and positioning an optical pickup for a disk player.

Still another object of the invention is to provide a motor drive that can be used in various devices without basic modification.

Still another object of the invention is to provide a motor drive that is compact and has high torque.

Still another object of the invention is to provide a motor drive that can operate with low vibration.

Still another object of the invention is to provide a motor drive that can operate for long periods without failure.

Briefly, a motor drive, for rotating turntables and moving optical pickups in CD players, employs two motors, in parallel, to power a drive train. In players used to play CD-ROMs, a high torque power source is required to permit high rotation speeds demanded by these units. In the present invention, the rotors of the motors are positioned side-by-side with their drive shafts interconnected by the drive train. Output is transmitted by one of the motor shafts. By combining the motors in this way, high output torque is achieved with a compact design. In the preferred embodiment, the rotors of the two motors are drivingly interconnected so that there is a one-to-one relationship between the rotor angular positions. The stators of the motors are positioned so that the torque peaks of one of the two motors occurs at a time different from those of the other motor. At least partial cancellation of the torque peaks is achieved. If only partial cancellation occurs, the result is that the drive cogs at a frequency that is twice that of a single motor. This makes the stopping resolution for the drive of the invention lower than in a system that employs one motor. Thus the optical pickup's positioning resolution can be greater. If total cancellation occurs, smooth drive output is achieved, which is a benefit for rotating the turntable.

According to an embodiment of the present invention, there is described, a motor drive for disk player turntables and optical pickups, comprising: a chassis, first and second motors having first and second output shafts and first and second bodies, respectively, the first and second motors being fixedly mounted on the chassis with substantially identical orientations and positions in a direction parallel to the first and second output shafts, means for drivingly connecting the first and second output shafts and a combined output shaft driven by the means for drivingly connecting.

According to another embodiment of the present invention, there is described, a motor drive for disk player turntables and optical pickups, comprising: first and second identical motors having respective torques and respective first and second shafts, the first and second motors having respective first and second rotational axes, means for permanently interconnecting the first and second shafts at a one-to-one drive ratio, whereby the first and second torques are combined to produce a combined torque, a combined output shaft for transmitting the combined torque of the first and second motors, the combined output shaft having an output axis about which the combined output shaft rotates, the combined output shaft being one of fixedly connected to and integral with the first output shaft, and positioned so that the output axis and the first rotational axis coincide and the output axis being parallel to, and a substantial distance from, the second rotational axis.

According to still another embodiment of the present invention, there is described, a motor drive for disk player turntables and optical pickups, comprising: a chassis, two identical motors having respective output shafts projecting from respective ends of the motors, the motors being connected to a chassis so that their output shafts are parallel and projecting in a same direction, means, connected to the chassis, for drivingly interconnecting the first and second output shafts and one of a turntable and an optical pickup scanning transmission being drivingly connected to the output shaft of one of the two motors.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a plan view of a drive mechanism according to a first embodiment of the invention.

Fig. 2 is a front-view of the drive mechanism of Fig. 1.

Fig. 3 is a right-side view of the drive mechanism of Figs. 1 and 2.

Fig. 4 is a plan view of the drive mechanism of Fig. 1 showing the internal configuration and arrangement of first and second spindle motors and first and second thread motors.

Fig. 5 is a torque-versus-rotation angle diagram showing output torques for a first motor, a second motor, and a combination of the first and second motor according to an embodiment of the present invention.

Fig. 6 is a plan view of a drive mechanism according to a second embodiment of the invention.

Fig. 7 is a front-view of the drive mechanism of Fig. 6.

Fig. 8 is a right-side view of the drive mechanism of Figs. 6 and 7.

Fig. 9 is a three-dimensional external view of a personal computer in which a CD-ROM drive is installed.

### DETAILED DESCRIPTION OF THE PREFERRED EMBODIMENTS

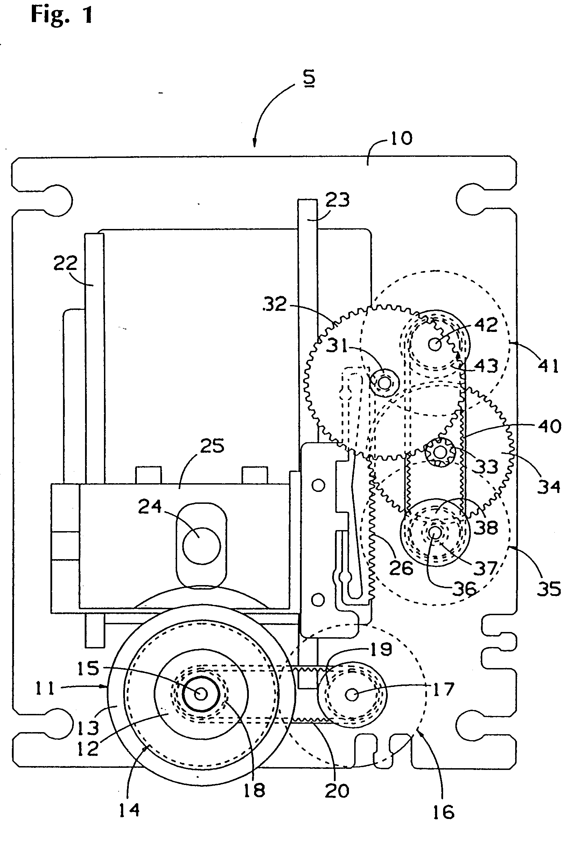

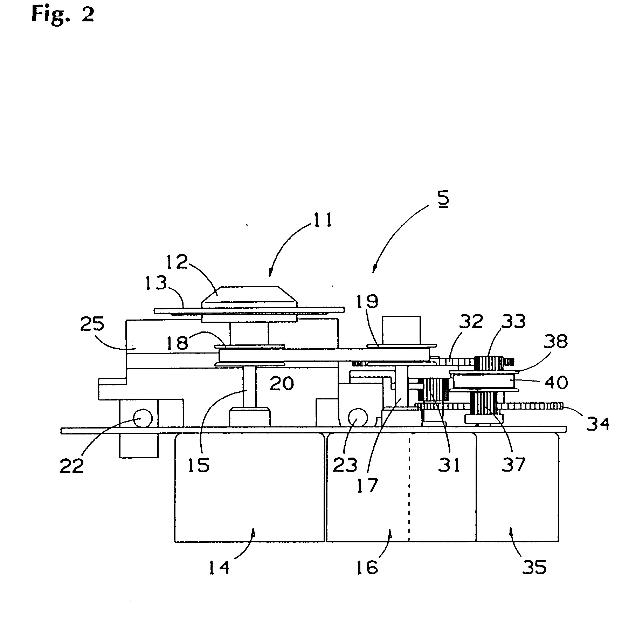

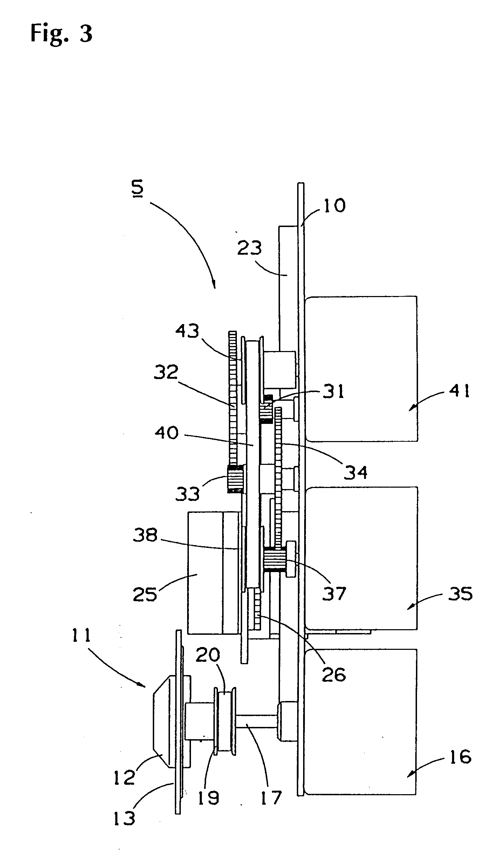

Referring to Figs. 1, 2 and 3, a drive mechanism 5 rotates a disk in a CD-ROM drive 1 to play back data recorded on a disk (not shown). A turntable 11, supports the disk. Turntable 11 includes a cone-shaped circular projection 12 for engaging a center hole of the disk. A circular mounting surface 13 supports the disk. Turntable 11 is attached to a shaft 15 of a first spindle motor 14, fixedly attached to a first side of a chassis 10.

A second spindle motor 16, similar to first spindle motor 14, is fixedly attached to the first side of chassis 10. Spindle motors 14 and 16 are positioned at the same height with their shafts 15 and 17 parallel to each other. Gears 18 and 19 are attached to shafts 15 and 17, respectively. An endless timing belt 20, with teeth on an its inward-facing surface, wraps around gears 18 and 19. Gears 18 and 19 have identical diameters so that spindle motors 14 and 16 are drivingly connected at a one-to-one drive ratio. Thus, turntable 11 is rotated by both spindle motors 14 and 16 in concert.

Two parallel guide shafts 22 and 23 are fixedly attached to a surface of chassis 10. Guide shafts 22 and 23 movably support an optical pickup 25. Optical pickup has an objective lens 24. A rack 26, fixedly mounted on optical pickup 25, extends parallel to the direction of movement of optical pickup 25. Rack 26 engages a small-diameter first deceleration gear 31, rotatably supported on another surface of chassis 10.

A large-diameter second deceleration gear 32 is integral with, and concentric with, first deceleration gear 31. Second deceleration gear 32 engages with a small-diameter third deceleration gear 33 rotating on another surface of chassis 10. A large-diameter fourth deceleration gear 34 is integral to, and concentric with, third deceleration gear 33. Fourth deceleration gear 34 engages a small-diameter gear 37, fixedly attached to a shaft 36 of a first thread motor 35, which is fixedly attached to a side of chassis 10.

A gear 38, integral to, and concentric with, gear 37, engages with another timing belt 40 which drivingly connects gear 38 to a gear 43. Gear 43 rotates on a shaft 42 of a second thread motor 41, fixedly attached to a second side of chassis 10. Diameters of gear 38 and gear 43 are identical so that thread motors 35 and 41 are drivingly connected at a one-to-one ratio. Thus, optical pickup 25 is driven by both thread motors 35 and 41 in concert.

A general-purpose motor (DC brush motor RF-310T made by Mabuchi Motors Corp.) is used for spindle motors 14 and 16 and thread motors 35 and 41. All these motors share the same outer diameters and characteristics. Each of these motors could drive turntable 11 or optical pickup 25 by itself, but in this embodiment, the motors are used in pairs. In this case, it would be desirable for spindle motors 14 and 16 as well as thread motors 35 and 41 to be electrically connected in parallel, and to have all the motors connected so that they turn in the same direction.

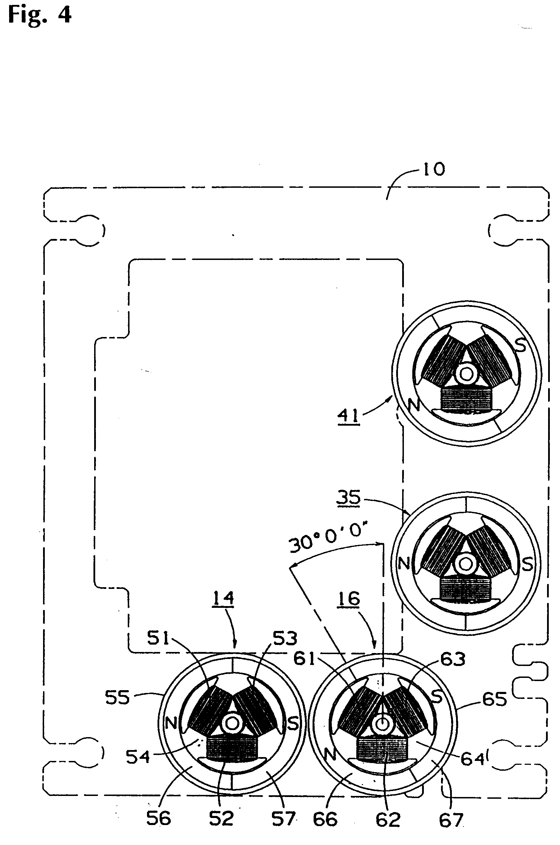

Referring to Fig. 4, the internal configuration and arrangement of first and second spindle motors 14 and 16 and first and second thread motors 35 and 41 is shown. Spindle motor 14 is a three-pole DC brush motor having a rotor 54 with three drive coils 51, 52, and 53. A motor housing 55, with a stator consisting of a fixed N-pole magnet 56 and a fixed S-pole magnet 57 embraces rotor 54. Similarly, spindle motor 16 has a rotor 64 with three drive coils 61, 62, and 63 embraced by and a motor housing 65 with a stator consisting of a fixed N-pole magnet 66 and a fixed S-pole magnet 67.

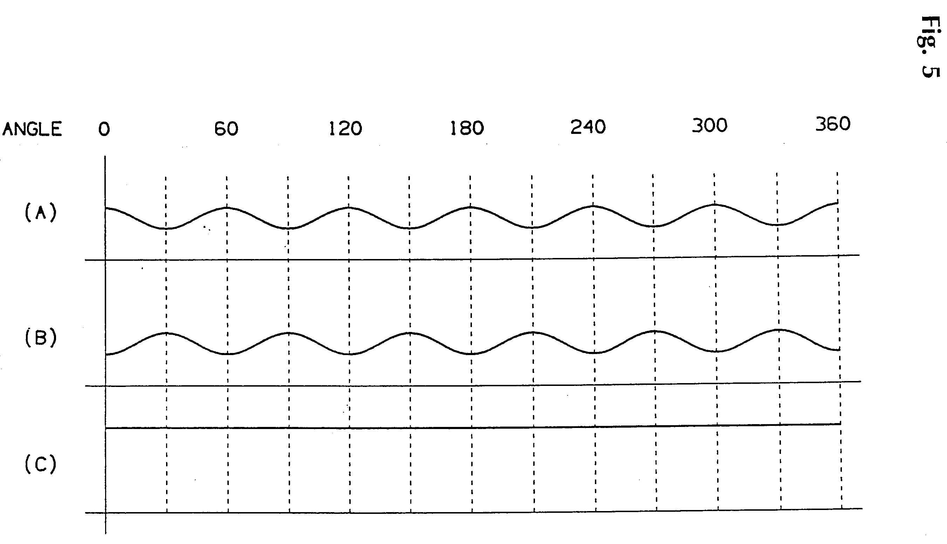

Referring to Fig. 5, output torque from spindle motors 14 is indicated by curve A and output torque of spindle motor 16 is indicated by curve B. The torque ripple for motors 14 and 16 has a period of 60 degrees of the rotation angle. In the first embodiment, motor housings 55 and 65 for spindle motors 14 and 16 are position so that their stators produce torque peaks that are offset by 30 degrees. Since shafts 15 and 17 of spindle motors 14 and 16 are connected by timing belt 20, rotors 54 and 64 have a constant rotational phase angle difference. Thus, the composite output torque of spindle motors 14 and 16 increases as represented by curve C and the torque ripples are canceled out. Thus, turntable 11 rotates smoothly. By configuring thread motors 35 and 41 in a similar fashion, torque ripples of thread motors 35 and 41 are similarly canceled out as optical pickup 25 moves.

Spindle motors 14 and 16 cooperatively rotate turntable 11 during start-up, normal rotation, acceleration, etc. Thus, the torque required to rotate the disk is provided by both motors 14 and 16. For this reason, the current drawn by motors 14 and 16, to obtain the required torque, is less than the current drawn by a single spindle motor. As a consequence, the predicted life-spans of spindle motors 14 and 16 increases, because less current flows in the electrodes and the sliding brushes (not shown in the drawings) for commutating coils 51-53 and 61-63. The predicted life-spans of thread motors 35 and 41 are also increased for the same reasons.

When either of thread motors 35 and 41, is operated independently (i.e., without the driving connection to each other), there are six natural stopping positions for shafts 36 and 42. That is, the motor tends to stop at positions separated by 60 degrees. Because of this, the minimum moving distance of optical pickup 25 is limited by this 60 degree angle. However, when thread motors 35 and 41 are drivingly interconnected as in the present invention, the cancellation effect of the 30 degree offset, causes the natural stopping positions to occur every 30 degrees instead. That is, the stopping angles for shafts 36 and 42 of thread motors 35 and 41 are positioned every 30 degrees, i.e. 12 positions in one rotation. Therefore, the minimum moving distance of optical pickup 25 is half that of a configuration with only one motor. This makes it possible to move optical pickup 25 by smaller increments to permit more precise positioning of optical pickup 25.

Referring to Figs. 1-3, chassis 10 is generally rectangularly shaped. In this embodiment, the four motors 14, 16, 35, and 41 are all positioned within the area covered by chassis 10. Each of the four motors 14, 16, 35, and 41 are all attached to one of the sides of chassis 10. Thus, the space requirement, as can be confirmed by inspection, is rather small for a configuration using two spindle motors and two thread motors.

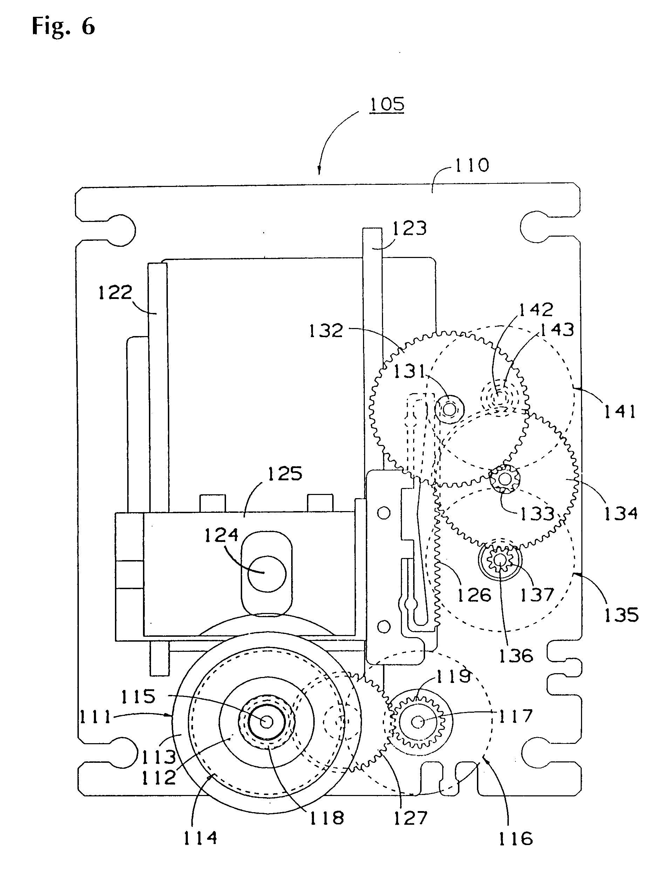

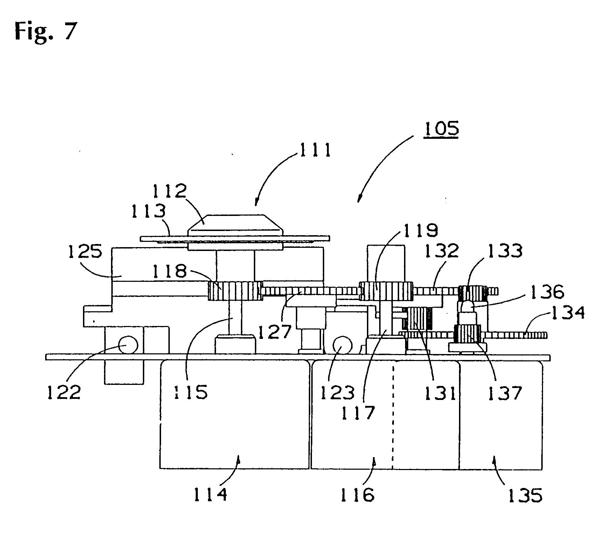

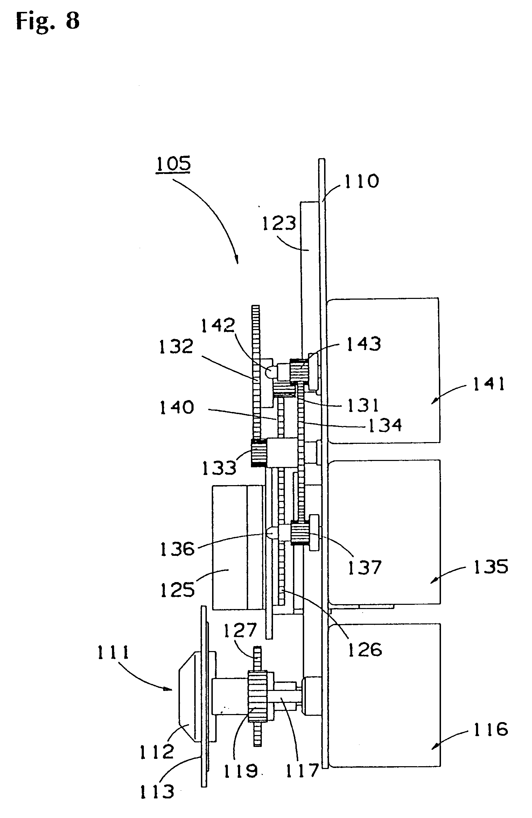

Referring to Figs. 6-8, a drive mechanism 105 of a second embodiment of the present invention employs gearing to drivingly interconnect the respective pairs of spindle motors 114 and 116, and thread motors 135 and 141. To shorten the text, the following description covers only the elements of the second embodiment that are different from the first embodiment first.

A gear 118 is attached to a shaft 115 of a first spindle motor 114, which is attached to a side of chassis 110. A second spindle motor 116 is attached to a side of chassis 110. A gear 119 rotates on a shaft 117 of second spindle motor 116. Gears 118 and 119 are drivingly interconnected by a connecting gear 127, rotatably supported on another side of chassis 110. The diameters of gears 118 and 119 are identical so that motors 114 and 116 are driven at a one-to-one drive ratio. Thus, turntable 111, attached to shaft 115, is rotated by both spindle motors 114 and 116.

A rack 126 fixedly attached to an optical pickup 125 engages a small-diameter first deceleration gear 131 rotating on a surface of chassis 110. A large-diameter second deceleration gear 132 is concentric and integral to first deceleration gear 131. Second deceleration gear 132 engages with a small-diameter third deceleration gear 133, which rotates on another surface of chassis 110. A large-diameter fourth deceleration gear 134 is integral to, and concentric with, third deceleration gear 133. Fourth deceleration gear 134 engages small-diameter gear 137 rotating on shaft 136 of first thread motor 135, fixedly attached to another side of chassis 110. Deceleration gear 134 is also connected to a gear 143 fixedly attached to a shaft 142 of second thread motor 141, attached to another side of chassis 110. The diameters of gears 137 and 143 are identical so that thread motors 135 and 142 are interconnected at a one-to-one drive ratio. Thus, optical pickup 125 is driven by both thread motors 135 and 141. As in the first embodiment, a general-purpose motor is used for spindle motors 114 and 116 and thread motors 135 and 141. The outer diameters and characteristics of the motors are identical.

As in the first embodiment, the stators of spindle motors 114 and 116 and thread motors 135 are 141 positioned to offset their respective torque ripple peaks by 30 degrees, as shown in Fig. 5. This serves to cancel out the torque ripple. In addition to positioning the stators in this way, depending on the configuration of the motor, it is also possible to obtain the desired phase relationship between torque curves by positioning the timing belts or gears connect so that the rotors are aligned to offset the torque peaks by 30 degrees. In this case, the motor stators, with their motor housings, can be aligned in the same, or any rotational position, relative to each other.

In the embodiments described above, the two motors are connected by a timing belt or gears. However, the present invention is not restricted to such drive interconnection means. It is possible to employ any of a variety of driving interconnections between the motors to obtain the benefits of the present invention, as long as the interconnection means does not produce excessive friction or vibration. In addition, the invention is not limited to embodiments consisting of only two motors. The invention could be applied to embodiments having three or more motors.

The present invention, employs a plurality of motors configured to rotate continuously a turntable making it possible for a plurality of inexpensive motors to provide the necessary torque, thereby allowing rapid changes in disk rotation speed with minimal cost. Because a plurality of motors are connected to each other, it is possible to locate the motors in otherwise useless space. Thus, the present invention can provide space-saving advantages for compact designs.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A motor drive for disk player turntables and optical pickups, comprising:
a chassis;
first and second motors having first and second output shafts and first and second bodies, respectively;
said first and second motors being fixedly mounted on said chassis with substantially identical orientations and positions in a direction parallel to said first and second output shafts;
means for drivingly connecting said first and second output shafts; and
a combined output shaft driven by said means for drivingly connecting.

2. A motor drive for disk player turntables and optical pickups as in claim 1, wherein said combined output shaft is said first output shaft.

3. A motor drive for disk player turntables and optical pickups as in claim 1, wherein said means for drivingly connecting includes means for synchronizing rotations of said first and second shafts at a one-to-one drive ratio.

4. A motor drive for disk player turntables and optical pickups as in claim 3, wherein:
said first motor has a first torque peak occurring at a first position of said first output shaft;
said second motor has a second torque peak occurring at a second position of said second output shaft; and
said means for synchronizing includes means for insuring that said first output shaft is in said first position at a time when said second shaft is in a position other than said second position, whereby said first and second torque peaks, at least partially, cancel each other out when said first and second motors rotate.

5. A motor drive for disk player turntables and optical pickups as in claim 1, wherein said first and second motors are physically substantially identical.

6. A motor drive for disk player turntables and optical pickups as in claim 5, wherein said means for drivingly interconnecting includes a timing belt.

7. A motor drive for disk player turntables and optical pickups as in claim 6, wherein said combined output shaft is said first output shaft.

8. A motor drive for disk player turntables and optical pickups as in claim 5, wherein:
said means for drivingly interconnecting includes first and second gears on said first and second motors, respectively; and
means for synchronizing rotations of said first and second gears at a one-to-one drive ratio.

9. A motor drive for disk player turntables and optical pickups as in claim 8, wherein said means for synchronizing includes a third gear, rotatably mounted on said chassis, in meshing engagement with at least one of said first and second gears.

10. A motor drive for disk player turntables and optical pickups as in claim 9, wherein said combined output shaft is said first output shaft.

11. A motor drive for disk player turntables and optical pickups as in claim 5, wherein:
said first motor has a first torque peak occurring at a first position of said first output shaft;
said second motor has a second torque peak occurring at a second position of said second output shaft; and
said means for drivingly connecting includes means for insuring that said first output shaft is in said first position at a time when said second shaft is in a position other than said second position, whereby said first and second torque peaks, at least partially, cancel each other out when said first and second motors rotate.

12. A motor drive for disk player turntables and optical pickups as in claim 10, wherein said combined output shaft is said first output shaft.

13. A motor drive for disk player turntables and optical pickups as in claim 1, wherein said first and second motors are physically substantially identical.

14. A motor drive for disk player turntables and optical pickups as in claim 1, wherein said means for drivingly interconnecting includes a timing belt.

15. A motor drive for disk player turntables and optical pickups as in claim 14, wherein said combined output shaft is said first output shaft.

16. A motor drive for disk player turntables and optical pickups as in claim 1, wherein:
said means for drivingly interconnecting includes first and second gears on said first and second motors, respectively; and
means for synchronizing rotations of said first and second gears at a one-to-one drive ratio.

17. A motor drive for disk player turntables and optical pickups as in claim 16, wherein said means for synchronizing includes a third gear, rotatably mounted on said chassis, in meshing engagement with at least one of said first and second gears.

18. A motor drive for disk player turntables and optical pickups as in claim 17, wherein said combined output shaft is said first output shaft.

19. A motor drive for disk player turntables and optical pickups as in claim 1, wherein:
said first motor has a first torque peak occurring at a first position of said first output shaft;
said second motor has a second torque peak occurring at a second position of said second output shaft; and
said means for drivingly connecting includes means for insuring that said first output shaft is in said first position at a time when said second shaft is in a position other than said second position, whereby said first and second torque peaks, at least partially, cancel each other out when said first and second motors rotate.

20. A motor drive for disk player turntables and optical pickups as in claim 18, wherein said combined output shaft is said first output shaft.

21. A motor drive for disk player turntables and optical pickups, comprising:
first and second identical motors having respective torques and respective first and second shafts;
said first and second motors having respective first and second rotational axes;
means for permanently interconnecting said first and second shafts at a one-to-one drive ratio, whereby said first and second torques are combined to produce a combined torque;
a combined output shaft for transmitting said combined torque of said first and second motors;
said combined output shaft having an output axis about which said combined output shaft rotates;
said combined output shaft being one of fixedly connected to and integral with said first output shaft, and positioned so that said output axis and said first rotational axis coincide; and
said output axis being parallel to, and a substantial distance from, said second rotational axis.

22. A motor drive as in claim 21, wherein said means for permanently interconnecting includes:
first and second timing gears attached to said first and second shafts, respectively; and
a timing belt meshingly engaged with said first and second timing gears.

23. A motor drive as in claim 21, wherein said means for permanently interconnecting includes:
first and second gears attached to said first and second shafts, respectively; and
means for meshingly interconnecting said first and second gears.

24. A motor drive as in claim 23, wherein said means for meshingly interconnecting includes:
a chassis;
an interconnect gear rotatably connected to said chassis;
said first and second motors being fixedly connected to said chassis; and
said interconnect gear being meshingly engaged with said first and second gears.

25. A motor drive as in claim 21, wherein:
said first motor has a first torque peak occurring at a first position of said first shaft;
said second motor has a second torque peak occurring at a second position of said second shaft; and
said means for permanently interconnecting includes means for insuring that said first shaft is in said first position at a time when said second shaft is in a position other than said second position, whereby said first and second torque peaks, at least partially, cancel each other out when said first and second motors rotate.

26. A motor drive as in claim 25, wherein said means for permanently interconnecting includes:
first and second timing gears attached to said first and second shafts, respectively; and
a timing belt meshingly engaged with said first and second timing gears.

27. A motor drive as in claim 25, wherein said means for permanently interconnecting includes:
first and second gears attached to said first and second shafts, respectively; and
means for meshingly interconnecting said first and second gears.

28. A motor drive as in claim 27, wherein said means for meshingly interconnecting includes:
a chassis;
an interconnect gear rotatably connected to said chassis;
said first and second motors being fixedly connected to said chassis; and
said interconnect gear being meshingly engaged with said first and second gears.

29. A motor drive for disk player turntables and optical pickups, comprising:
a chassis;
two identical motors having respective output shafts projecting from respective ends of said motors;
said motors being connected to a chassis so that their output shafts are parallel and projecting in a same direction;
means, connected to said chassis, for drivingly interconnecting said first and second output shafts; and
one of a turntable and an optical pickup scanning transmission being drivingly connected to said output shaft of one of said two motors.

30. A motor drive as in claim 29, wherein:
said one of a turntable and an optical pickup scanning transmission is a turntable; and
said turntable is fixedly connected to said turntable, whereby said turntable is rotated by a combined torque of said two motors.

31. A motor drive as in claim 29, wherein said two motors are substantially aligned along a line of said same direction, whereby a maximum dimension of a space occupied by said two motors in along said line is substantially identical to a maximum dimension of a space occupied by a single one of said two motors along said line.
